# EUROPEAN PATENT SPECIFICATION

(11) **EP 4 476 006 B1**
(45) Date of publication and mention of the grant of the patent: **19.11.2025**
(21) Application number: 23704834.3
(22) Date of filing: 07.02.2023
(51) Int. Cl.: B09C 1/00, B01D 17/02, E21B 43/38, E21B 47/047, F04B 49/02, B01D 17/12, C02F 1/40, E21B 37/00, E21B 43/12, F04B 49/025, C02F 1/32, F04B 49/10, C02F 101/32, C02F 103/06

(54) **APPARATUS AND METHOD FOR THE REMOVAL OF A DNAPL PHASE FROM A POLLUTED AQUIFER**
VORRICHTUNG UND VERFAHREN ZUR ENTFERNUNG EINER DNAPL-PHASE AUS EINEM VERUNREINIGTEN AQUIFER
APPAREIL ET PROCÉDÉ POUR L'ÉLIMINATION D'UNE PHASE DNAPL D'UN AQUIFÈRE POLLUÉ

(30) Priority: 08.02.2022 IT 202200002243
(43) Date of publication of application: 18.12.2024
(73) Proprietor: Eni S.p.A., 00144 Roma (IT)
(72) Inventor: CHIODINI, Andrea, 28100 Novara (NO) (IT); LODA, Stefano, 28100 Novara (NO) (IT)
(74) Representative: Studio Torta S.p.A.
(86) International application number: PCT/IB2023/051074
(87) International publication number: WO 2023/152632

(56) References cited:
- US-A- 5 049 037
- US-A- 5 147 559
- US-A1- 2019 330 084

## Description

### Cross-Reference to Related Applications

This Patent Application claims priority from Italian Patent Application No. 102022000002243 filed on February 8, 2022

### Technical Field

The present invention relates to an apparatus and related method for the removal of a dense non aqueous phase fluid, with a density greater than that of water, from a body of water, in particular for groundwater remediation contaminated by non-aqueous organic phases present as separated phases.

### Background

The treatment of water polluted by organic compounds and the remediation of hydrocarbon-contaminated aquifers is a highly topical issue and, to date, much attention is given to this subject for the development of increasingly effective and cost-efficient technologies in order to purify contaminated sites. Widespread use, improper disposal, and accidental spills and leaks of hydrocarbons, such as petroleum derivatives and organic solvents, have caused the formation of persistent sources of soil and aquifer water contamination, which are dangerous due to their effects on the environment and human health. Depending on the density of the organic compared to water, water-immiscible liquid layers may float, known as LNAPLs (Light Non Aqueous Phase Liquids), or sink, known as DNAPLs (Dense Non Aqueous Phase Liquids), in the aquifer.

To date, several methods are known for treating contaminated water, but all of them require an assigned operator for the activities of monitoring the thickness of the DNAPL phase in the aquifer, for positioning and activating and deactivating the pump for recovery. Known remediation systems are also characterised by a recovery of significant amounts of water (up to 50% more than the recovered DNAPL phase) with related costs for the treatment or disposal as hazardous waste. The pump drive is interrupted when the presence of water is observed **in** the collection tank and thus the entire pipeline rising from the aquifer is full of water. In addition, using the known systems, the recovery of the DNAPL phase is performed with a frequency that depends on the production of the piezometric well and on its position. Under these conditions, periods of accumulation of DNAPL phase are originated within the piezometric well, slowing down the remediation procedure.

US5049037A discloses a control system for an in-well pump for recovery of hydrocarbons which are lighter than water. Two electrical probes and a float switch are used to control the automatic raising and lowering of the pump within the well to always maintain its input within the hydrocarbon layer. The pump is also controlled so that it only operates when its input is within the hydrocarbons to assure that it does not pump water and that it is not operated in air.

US5147559A discloses a system for the removal of immiscible supernatant liquids; the apparatus is equipped with a skim pump which is adequately controlled in its operation by sensors that detect the presence and level of water and supernatant.

The different known systems described above do not fully meet the increasingly urgent requirements for the remediation of contaminated sites, responding to the need for fast, effective and low-cost interventions.

Many of the known systems have such an amount of water in the extracted fluid as to require a surface-separation posttreatment involving high water disposal/treatment costs.

The aim of the present invention is to realise an apparatus and a process overcoming the drawbacks of the prior art, enabling the removal of a non-aqueous DNAPL phase from a body of water effectively, quickly and with a lower cost impact.

The invention relates to a compact apparatus for removing a DNAPL phase from a body of water that is able to pump and monitor the level of the DNAPL phase automatically by following fluctuations in order to optimise collection thereof.

### Summary

The aim of the present invention is therefore an apparatus 100 for the removal of a DNAPL phase 300 from a body of water in a polluted aquifer as defined in attached claim 1 and thus comprising a pumping device 110 for recovering and sending to the surface the DNAPL phase 300, at least one first probe 120 for detecting the level of the DNAPL phase 300, a recovery conduit 150, connected to the outlet of the pumping device 110, which channels the DNAPL phase 300 to the surface, a control unit 200, positioned on the surface, which controls the power supply of the apparatus 100, the acquisition and processing of signals from the first probe 120, the sending of signals for starting or stopping the pumping device 110 based on the signals from the first probe 120; characterized in that the pumping device 110 comprises a hollow body 111, a first non-return valve 180 arranged in the bottom part of the hollow body 111 which puts in fluid communication the hollow body 111 with the aquifer fluid, a suction pipe 112 housed in the hollow body 111, a second non-return valve 190 arranged at the outlet of the suction pipe 112 and connecting the suction pipe 112 fluidically with the recovery conduit 150, a pneumatic line 170, departing from the surface, intercepted by a first solenoid valve 181, connected to the hollow body 111 for selective pressurization thereof and a second solenoid valve 182 intercepting the recovery conduit 150.

A process for the removal of a non-aqueous DNAPL phase from a contaminated body of water as claimed by claim 8 is also an object of the present invention.

### Brief Description of the Drawings

The characteristics and advantages of the present invention will appear clear from the following description of a non-limiting embodiment thereof, with reference to the figures of the attached drawings, wherein:
- Figure 1 is a simplified schematic view of the apparatus 100, inserted into a piezometric well 10, comprising at least a first probe 120 for detecting the level of the DNAPL phase 300;
- Figure 2 is a simplified schematic view of the apparatus 100, inserted into a piezometric well 10, comprising at least a first probe 120 and a second probe 130 for detecting the level of the DNAPL phase 300;
- Figure 3 is a simplified schematic view of the apparatus 100, inserted into a piezometric well 10, comprising conductivity probes 120, 130, 140;
- Figures 4a, 4b, 4c represent simplified views of the apparatus 100 at different levels of DNAPL phase and how this phase interacts with the conductivity probes 120, 130 and 140;
- Figure 5 is a schematic view of the pumping device 110 of the apparatus 100 in case of pneumatic operation including actuating solenoid valves 181, 182, suction tube 112 and pneumatic line 170 with parts omitted for the sake of clarity;

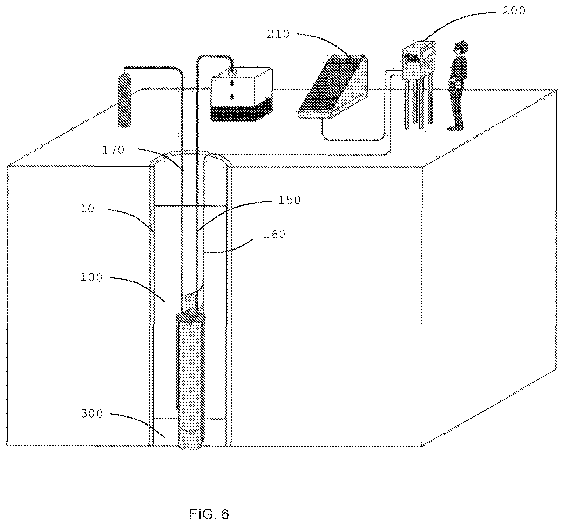

- Figure 6 is a simplified schematic view of the installation of the apparatus 110 inside a piezometric well 10 including the control unit 200 and other accessory components;

### Description of Embodiments

In the context of the present invention, a Dense Non Aqueous Phase Liquid phase, present in a body of water, is defined as a phase separated from other phases with a specific gravity greater than that of water, so as to create a DNAPL layer lying below that of the water present in the aquifer.

In the context of the present invention, the term "upper" is to be understood as indicating a position closer to the surface, while the term "lower" is to be understood as indicating a position closer to the bottom of the piezometric well 10.

The present invention is applied in a context in which a contaminated body of water contains at least one non-aqueous, separated phase 300.

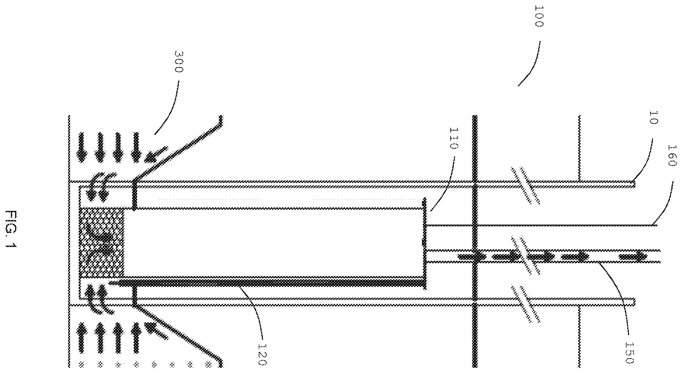

With reference to Figure 1, the object of the present invention is an apparatus 100 for removing a non-aqueous DNAPL phase 300 from a body of water in a polluted aquifer which has a pumping device 110 for sucking and sending the DNAPL phase 300 to the surface. The apparatus 100 is lowered into a piezometric well 10 so that it is immersed in the aquifer fluid. The apparatus 100 has a first probe 120 for detecting the level of the DNAPL phase 300. When the probe 120 detects the presence of a DNAPL phase 300, the corresponding signal is sent to the control unit 200 which, upon receiving the information of the presence of a DNAPL phase 300, activates the pumping device 110. When the probe 120 no longer detects the presence of a DNAPL phase 300, the corresponding signal sent to control unit 200 causes pumping operations to stop. The apparatus 100 also has a conduit 150 for recovering the pumped phase 300, connected to the outlet of the pumping device 110, which channels the DNAPL phase 300 to the surface to be collected in an on-site tank. A control unit 200, positioned on the surface and electrically connected to the apparatus 100 arranged in the piezometric well 10, controls the power supply of the apparatus 100, the acquisition and processing of signals from the probe 120, the sending of signals to start or stop the pumping device 110 based on the signals from the probe 120. The control unit 200 then selectively activates the pumping of the DNAPL phase 300 based on predetermined algorithms using information received from the probe 120.

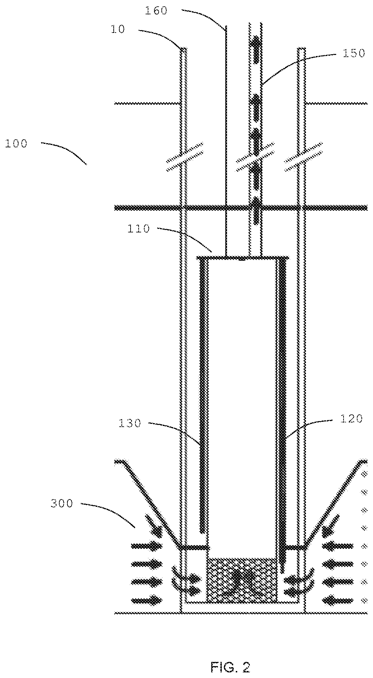

Referring to Figure 2, in a preferred embodiment of the invention, the apparatus 100 as previously described comprises a second probe 130 for high-level detection of the DNAPL phase 300, positioned above the first probe 120 configured for detection of a high level of DNAPL phase 300, wherein the control unit 200 manages the acquisition and processing of signals from the first probe 120 and the second probe 130, the sending of signals for starting or stopping the pumping device 110 based on the signals from the first probe 120 and from the second probe 130. In this configuration, the apparatus 100 is able to detect both a predefined high level and a predefined low level for DNAPL phase 300; the control unit 200 can thereby selectively command the start and stop of the pumping device 110 based on the fact that the level of the DNAPL phase 300 is greater than the minimum level, while also having at its disposal, by means of the combined information of the probes 120 and 130, the data relative to the level trend of the DNAPL phase 300 in relation to the flow rate of said phase 300 withdrawn from the aquifer.

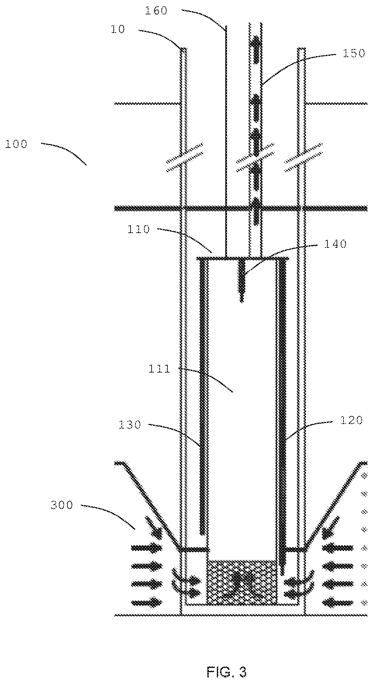

Referring to Figure 3, in a further preferred embodiment of the invention, the apparatus 100 for the removal of a DNAPL phase 300 from a body of water in a polluted aquifer comprises a pumping device 110 for recovering and sending to the surface the DNAPL phase; the apparatus is lowered into a piezometric well 10 so as to be immersed in the aquifer fluid. The apparatus 100 has a first conductivity probe 120 for the low-level detection of the DNAPL phase 300, a second conductivity probe 130 for the high-level detection of the DNAPL phase 300 placed below the first conductivity probe 120 and a third reference conductivity probe 140 placed above the first and second conductivity probes. The probes 120 and 130 operate by discriminating between electrically conductive and non-electrically conductive fluid by setting a reference limit threshold and closing the circuit via the reference conductivity probe 140. Both probes 120 and 130 operate together with the reference probe 140, closing an electrical circuit if there is an electrically conductive phase in contact with the probes 120, 130. The conductivity probe 140 is immersed in water (electrically conductive phase). When at least one of the probes 120, 130 is immersed in an organic, non-electrically conductive DNAPL phase, the relative electrical circuit through the probe 140 remains open, transferring the information to the control unit 200. Depending on a conductive or non-conductive liquid phase is present at the first probe 120 or the second probe 130, it is possible to know whether the level of the non-conductive liquid phase 300 has reached the minimum level corresponding to the conductivity probe 120 or the maximum level corresponding to the conductivity probe 130. The apparatus 100 also has a conduit 150 for recovering the pumped phase 300, connected to the outlet of the pumping device 110, which pumps the DNAPL phase 300 to the surface to be collected in an on-site tank. A control unit 200, positioned on the surface and electrically connected to the apparatus 100 placed in the piezometric well 10, controls the power supply of the apparatus 100, the acquisition and processing of signals from the conductivity probes 120, 130, 140, the sending of signals for starting or stopping the pumping device 110 based on signals from the conductivity probes 120, 130, 140. The control unit 200 then, by means of the information received from the conductivity probes 120, 130, 140, selectively activates the pumping of the DNAPL phase 300 based on predetermined algorithms. In a preferred embodiment of the invention, the conductivity probe 140 may be replaced by the housing of the apparatus 100 itself, which acts as an electrically conductive element in the presence of aqueous fluid.

In a preferred embodiment of the invention as previously described, the pumping device 110 is made using an electric pump; the electric pump, depending on the level of the DNAPL phase 300 detected by one or more of the previously described probes, is activated by means of the control unit 200 providing for suction and removal of said DNAPL phase 300 to the surface. When the level of the DNAPL phase 300 reaches a preset minimum at the positioning of the probe configured to detect the low level, the pump is switched off, interrupting the recovery and preventing the suction of water to the surface.

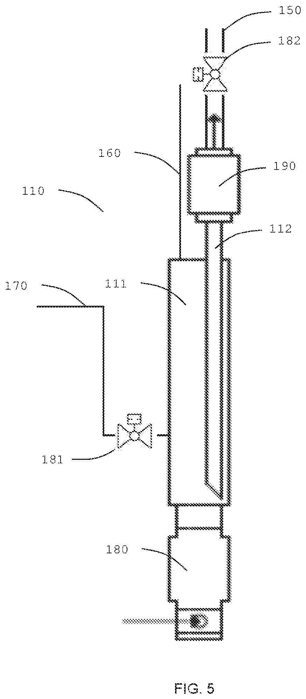

With reference to Figure 5, in a further preferred embodiment of the invention as previously described, in alternative to using an electric pump, the pumping device 110 is made pneumatically; to this end, the pumping device 110 comprises a hollow body 111, a first non-return valve 180 installed in the lower part of the hollow body 111 which puts in fluidic communication the hollow body 111 with the aquifer fluid, a suction tube 112 housed in the hollow body 111, a second non-return valve 190 arranged at the outlet of the suction pipe 112 fluidically connecting it with the recovery conduit 150, a pneumatic line 170, coming from the surface, intercepted by a first solenoid valve 181, connected to the hollow body 111 for the selective pressurisation thereof, and a second solenoid valve 182 intercepting the recovery conduit 150. In this configuration, the selective pneumatic pressurisation via the solenoid valve 181 of the hollow body 111 allows to push the DNAPL phase 300 contained therein to the surface. The non-return valve 190 prevents the reflux of the recovered DNAPL phase 300 present in the recovery conduit 150 from the surface to the well 10. The function of the non-return valve 180, on the other hand, is to allow the entry of the DNAPL phase 300 from the well 10 into the hollow body 111 when not pressurised, preventing it from escaping to the well 10 when the hollow body 111 is pressurised to push the phase 300 to the surface. The solenoid valve 182 is selectively operated via the control unit 200 to intercept the recovery conduit 150.

In a further preferred embodiment of the invention, the previously described conductivity probes 120, 130, 140 comprise a central body made of an electrically conductive material, the central body being coated with an insulating material leaving uncovered an end section which is exposed to contact with aquifer fluids. Thus, the probes 120, 130, 140 operate as open or closed contacts depending on whether the uncovered end section of the central body is in contact with an electrically conductive liquid or not.

The power supply of the apparatus 100 takes place by means of electric lines 160 that run from the control unit 200 down into the piezometric well 10 to connect to the apparatus 100. The electric lines 160 also connect the conductivity probes 120, 130, 140 to the control unit 200 and also supply the electric pump in the preferred embodiment where it is present. The control unit 200 may be connected to the electric power grid or may be energised using batteries. The battery-powered solution, preferably rechargeable, allows the apparatus 100 to be even more versatile and independent of the context wherein it is used, as it does not require the presence of an external power supply grid.

In a preferred configuration of the invention, therefore, the control unit 200 comprises at least one rechargeable battery for power supply without using additional external power sources.

In a further preferred configuration of the invention, in order to increase the operating autonomy and improve availability, the control unit 200 is connected to at least one solar panel 210 configured to recharge the at least one rechargeable battery.

In a preferred configuration of the invention, the control unit 200 comprises at least one programmable timer.

A process for removing a DNAPL phase 300 from a contaminated body of water in order to minimise the recovery of polluted groundwater to be subsequently treated on the surface with an obvious increase in costs is also an object of the present invention; the process relies on predetermined rationales driven by the control unit 200 which, depending on the signals coming from the conductivity probes 120, 130, 140, selectively activates the pumping device 110 only when the level of DNAPL phase 300 is higher than a predefined minimum level. The recovery of the DNAPL phase 300 is thus minimised while keeping the pumping of polluted water to a minimum. The method object of the present invention makes it possible to selectively actuate the pumping device 110 not only by minimising the polluted water pumped to the surface, but also by rationalising the electrical consumption of the device itself, which is only activated in case the DNAPL phase 300 is above the minimum predetermined level.

An object of the present invention is therefore a process for the removal of a non-aqueous phase 300 from a body of water in a polluted aquifer comprising the steps of:
a) providing a piezometric well 10 in the polluted aquifer;
b) lowering the apparatus 100 into the piezometric well 10 wherein the pumping device 110 is pneumatically driven;
c) detecting the presence of non-aqueous phase 300 by means of signals from the conductivity probes 120, 130, 140;
d) depressurizing the hollow body 111 by opening the second solenoid valve 182 and closing the first solenoid valve 181;
e) permitting, by opening the first non-return valve 180 subject to aquifer pressure, the entrance of non-aqueous phase 300 in the hollow body 111;
f) pressurizing the hollow body 111 by opening the first solenoid valve 181 causing the closing of the first non-return valve 180 and the emptying of the hollow body 111 via the suction pipe 112 and the recovery conduit 150 by means of the pressure through the pneumatic line 170;
g) cyclically repeating the steps d) to f) if the signals from the conductivity probes (120, 130, 140) confirm the presence of DNAPL phase 300;
h) interrupting the pumping when the signals from the conductivity probes (120, 130, 140) confirm the reaching of a predetermined minimum level of the DNAPL phase 300, maintaining pressurized the hollow body (111) and closing the second solenoid valve (182) blocking the flow to the recovery conduit (150).

The pumping device 110, in the pneumatic configuration, therefore performs a cyclic evacuation of DNAPL phase 300 accumulated in the hollow body 111; when the hollow body 111 is depressurised by closing the pneumatic line 170 by means of the first solenoid valve 181, the pressure of the aquifer fluid opens the first non-return valve 180, allowing the entry of DNAPL phase 300. Subsequently, the pressurisation of the hollow body 111 by opening the pneumatic line 170 via the first solenoid valve 181 and the opening of the recovery conduit 150 via the second solenoid valve 182 allow the volume of DNAPL phase 300 collected in the hollow body 111 to flow to the surface. When the hollow body 111 is emptied, it is depressurised again as described above to start a new cycle of filling and discharge to the surface.

These operations of filling the hollow body 111 and subsequently evacuating the collected DNAPL phase 300 may be repeated at varying time intervals; the complete filling of the hollow body 111 is thereby allowed depending on the density, viscosity, pressure and temperature of the phase 300.

In a preferred embodiment of the invention, therefore, in the process for removing a non-aqueous dense phase 300 from a body of water in a polluted aquifer, the step g) of cyclically repeating steps d) to f) is carried out at predetermined intervals set by a programmable timer inserted in the control unit (200).

The process described thus allows to effectively and selectively manage the collection and evacuation of the phase 300; moreover, as described above, the apparatus 100 is only operating when necessary, i.e. when a predetermined minimum level of DNAPL phase 300 is present.

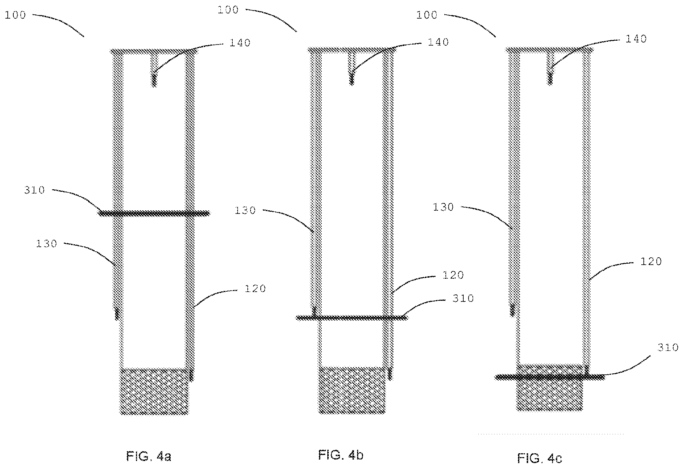

Referring to Figures 4a, 4b and 4c, the level 310 of the DNAPL phase 300 and how it interacts with the conductivity probes 120, 130, 140 for the selective activation of the pumping device 110 is schematically represented. In particular, with reference to Figure 2a, the level 310 of the DNAPL phase 300 is above the position of the first conductivity probe 120 and therefore above the maximum level; in this condition the pumping device 110 is active to evacuate the DNAPL phase 300.

With reference to Figure 2b, the level 310 of the DNAPL phase 300 is in an intermediate position with respect to the first conductivity probe 120 and the second probe 130; in this condition, the pumping device 110 is active to evacuate the DNAPL phase 300 and, by means of the control unit 200, information is acquired that the level of the DNAPL phase 300 is falling with respect to the configuration represented in Figure 2a. Finally, with reference to Figure 2c, the level 310 of the DNAPL phase 300 is lower than the first conductivity probe 120 and therefore lower than the predetermined minimum level; in this condition, the pumping device 110 is stopped, advantageously preventing polluted aquifer water from being sucked and sent to the surface.

The apparatus 100 for the removal of a DNAPL phase 300 in a contaminated body of water, which is the object of the present invention as thus conceived, is susceptible in each case to numerous modifications and variants, all of which fall within the same inventive concept; moreover, all the details may be replaced by technically equivalent elements. In particular, the probes 120, 130 140, intended to detect the level of non-aqueous infranatant phase 300, may be of various shapes and types as available on the market. The level probes applicable to the present invention are all those capable of distinguishing water from an organic phase. For exemplary and non-limiting purposes, the probes 120, 130, 140 may be conductivity, radio frequency, radar or other equivalent probes known on the market. The materials used, as well as the shapes and dimensions, may in practice be of any type according to the technical requirements. The protective scope of the invention is therefore defined by the appended claims.

## Claims

1. An apparatus (100) for the removal of a Dense Non Aqueous Phase Liquid (DNAPL) phase (300) from a body of water in a polluted aquifer comprising a pumping device (110) for recovering and sending to the surface the DNAPL phase (300), at least one first probe (120) for detection of the level of the DNAPL phase (300), a recovery conduit (150), connected to the outlet of the pumping device (110), which channels the DNAPL phase (300) to the surface, a control unit (200), positioned on the surface, which controls the power supply of the apparatus (100), the acquisition and processing of signals from the first probe (120), the sending of signals for starting or stopping the pumping device (110) based on the signals from the first probe (120); **characterized in that** the pumping device (110) comprises a hollow body (111), a first non-return valve (180) arranged in the bottom part of the hollow body (111) which puts in fluid communication the hollow body (111) with the aquifer fluid, a suction pipe (112) housed in the hollow body (111), a second non-return valve (190) arranged at the outlet of the suction pipe (112) and connecting the suction pipe (112) fluidically with the recovery conduit (150), a pneumatic line (170), departing from the surface, intercepted by a first solenoid valve (181), connected to the hollow body (111) for selective pressurization thereof and a second solenoid valve (182) intercepting the recovery conduit (150).

2. The apparatus (100) according to claim 1 comprising a second probe (130) for high-level detection of the DNAPL phase (300), positioned above the first probe (120) and configured for detection of a high level of the DNAPL phase (300), wherein the control unit (200) controls the acquisition and processing of signals from the first probe (120) and from the second probe (130), and the sending of signals for starting or stopping the pumping device (110) based on the signals from the first probe (120) and from the second probe (130).

3. The apparatus (100) according to claim 2 wherein the first probe (120) and the second probe (130) are conductivity probes, the apparatus (100) comprising a third reference conductivity probe (140) positioned above the first and the second conductivity probes, the control unit (200) controlling the acquisition and processing of signals from the conductivity probes (120, 130, 140), the sending of signals for starting or stopping the pumping device (110) based on the signals from the conductivity probes (120, 130, 140) .

4. The apparatus (100) according to claim 3 wherein the conductivity probes (120, 130, 140) comprise a central body made of electrically conductive material, the central body being coated with an insulation material except for a portion which is exposed to contact with the aquifer fluids.

5. The apparatus (100) according to any one of the preceding claims wherein the control unit (200) comprises at least one rechargeable battery for the power supply without the use of additional external power sources.

6. The apparatus (100) according to any one of the preceding claims wherein the control unit (200) is connected to at least one solar panel (210) configured to recharge the at least one rechargeable battery.

7. The apparatus (100) according to any one of claims 1 to 3 wherein the pumping device (110) is an electric pump.

8. A process for the removal of a DNAPL phase (300) from a body of water in a polluted aquifer comprising the steps of:
a) providing a piezometric well (10) in the polluted aquifer;
b) lowering in the piezometric well (10) the apparatus (100) according to claim 1;
c) detecting the presence of DNAPL phase (300) by means of signals from the conductivity probes (120, 130, 140);
d) depressurizing the hollow body (111) by opening the second solenoid valve (182) and closing the first solenoid valve (181);
e) permitting, by opening the first non-return valve (180) subject to aquifer pressure, the entrance of DNAPL phase (300) in the hollow body (111);
f) pressurizing the hollow body (111) by opening the first solenoid valve (181) causing the closing of the first non-return valve (180) and the emptying of the hollow body (111) via the suction pipe (112) and the recovery conduit (150) by means of the pressure exerted through the pneumatic line (170);
g) cyclically repeating the steps d) to f) if the signals from the conductivity probes (120, 130, 140) confirm the presence of DNAPL phase (300);
**h)** interrupting the pumping when the signals from the conductivity probes (120, 130, 140) confirm the reaching of a predetermined minimum level of the DNAPL phase (300), maintaining pressurized the hollow body (111) and closing the second solenoid valve (182) blocking the flow to the recovery conduit (150).

9. The process according to claim 8 wherein the step g) of cyclically repeating the steps d) to f) is carried out at predetermined intervals set by a programmable timer inserted in the control unit (200).

## Patentansprüche

1. Vorrichtung (100) für die Entfernung einer Schwerphase bzw. dichten Nichtwässrige-Phase-Flüssigkeit(DNAPL)-Phase (300) aus einem Gewässer in einem verschmutzten Grundwasserleiter, umfassend eine Pumpeinrichtung (110) zum Rückgewinnen und Senden bzw. Fördern der DNAPL-Phase (300) an die Oberfläche, zumindest eine erste Sonde (120) zur Detektion des Pegels der DNAPL-Phase (300), eine Rückgewinnungsrohrleitung (150), die mit dem Auslass der Pumpeinrichtung (110) verbunden ist, welche die DNAPL-Phase (300) an die Oberfläche leitet, eine an der Oberfläche positionierte Steuer- bzw. Regeleinheit (200), welche die Stromversorgung der Vorrichtung (100), die Erfassung und Verarbeitung von Signalen von der ersten Sonde (120) und das Senden von Signalen zum Starten oder Stoppen der Pumpeinrichtung (110) basierend auf den Signalen der ersten Sonde (120) steuert bzw. regelt; **dadurch gekennzeichnet, dass** die Pumpeinrichtung (110) einen Hohlkörper (111), ein in dem unteren Teil des Hohlkörpers (111) angeordnetes erstes Rückschlagventil (180), das den Hohlkörper (111) mit der Grundwasserleiterflüssigkeit in Fluidverbindung versetzt, ein in dem Hohlkörper (111) untergebrachtes Saugrohr (112), ein zweites Rückschlagventil (190), das an dem Auslass des Saugrohrs (112) angeordnet ist und das Saugrohr (112) fluidisch mit der Rückgewinnungsrohrleitung (150) verbindet, eine Pneumatikleitung (170), die von der Oberfläche ausgeht, durch ein erstes Magnetventil (181), das mit dem Hohlkörper (111) zu dessen selektiver Druckbeaufschlagung verbunden ist, und ein zweites Magnetventil (182) unterbrochen ist, das die Rückgewinnungsrohrleitung (150) unterbricht.

2. Vorrichtung (100) nach Anspruch 1, umfassend eine zweite Sonde (130) zur Hochpegeldetektion der DNAPL-Phase (300), die oberhalb der ersten Sonde (120) positioniert und konfiguriert ist, einen hohen Pegel der DNAPL-Phase (300) zu detektieren, wobei die Steuer- bzw. Regeleinheit (200) die Erfassung und Verarbeitung von Signalen von der ersten Sonde (120) und von der zweiten Sonde (130) sowie das Senden von Signalen zum Starten oder Stoppen der Pumpeinrichtung (110) basierend auf den Signalen von der ersten Sonde (120) und von der zweiten Sonde (130) steuert bzw. regelt.

3. Vorrichtung (100) nach Anspruch 2, wobei die erste Sonde (120) und die zweite Sonde (130) Leitfähigkeitssonden sind, wobei die Vorrichtung (100) eine dritte Referenzleitfähigkeitssonde (140) umfasst, die oberhalb der ersten und der zweiten Leitfähigkeitssonden positioniert ist, wobei die Steuer- bzw. Regeleinheit (200) die Erfassung und Verarbeitung der Signale von den Leitfähigkeitssonden (120, 130, 140), das Senden von Signalen zum Starten oder Stoppen der Pumpeinrichtung (110) basierend auf den Signalen von den Leitfähigkeitssonden (120, 130, 140) steuert bzw. regelt.

4. Vorrichtung (100) nach Anspruch 3, wobei die Leitfähigkeitssonden (120, 130, 140) einen zentralen Körper aus elektrisch leitfähigem Material umfassen, wobei der zentrale Körper mit Ausnahme eines Abschnitts, der einem Kontakt mit den Grundwasserleiterflüssigkeiten ausgesetzt ist, mit einem Isoliermaterial beschichtet ist.

5. Vorrichtung (100) nach einem der vorhergehenden Ansprüche, wobei die Steuer- bzw. Regeleinheit (200) zumindest eine wiederaufladbare Batterie bzw. einen Akku für die Stromversorgung ohne die Verwendung zusätzlicher externer Stromquellen umfasst.

6. Vorrichtung (100) nach einem der vorhergehenden Ansprüche, wobei die Steuer- bzw. Regeleinheit (200) mit zumindest einem Solarpanel (210) verbunden ist, das konfiguriert ist, den zumindest einen Akku aufzuladen.

7. Vorrichtung (100) nach einem der Ansprüche 1 bis 3, wobei die Pumpeinrichtung (110) eine elektrische Pumpe ist.

8. Verfahren für die Entfernung einer DNAPL-Phase (300) aus einem Gewässer in einem verschmutzten Grundwasserleiter, umfassend die Schritte:
a) Bereitstellen eines piezometrischen Bohrlochs (10) in dem verschmutzten Grundwasserleiter;
b) Absenken, in dem piezometrischen Bohrloch (10), der Vorrichtung (100) nach Anspruch 1;
c) Detektieren des Vorhandenseins der DNAPL-Phase (300) mittels Signalen von den Leitfähigkeitssonden (120, 130, 140);
d) Druckentlasten des Hohlkörpers (111) durch Öffnen des zweiten Magnetventils (182) und Schließen des ersten Magnetventils (181);
e) Ermöglichen, durch Öffnen des ersten Rückschlagventils (180), das Grundwasserleiterdruck ausgesetzt ist, des Eintritts der DNAPL-Phase (300) in den Hohlkörper (111);
f) Druckbeaufschlagen des Hohlkörpers (111) durch Öffnen des ersten Magnetventils (181), wodurch das Schließen des ersten Rückschlagventils (180) und das Entleeren des Hohlkörpers (111) über das Saugrohr (112) und die Rückgewinnungsrohrleitung (150) mittels des durch die Pneumatikleitung (170) ausgeübten Drucks bewirkt wird;
g) zyklisches Wiederholen der Schritte d) bis f), wenn die Signale von den Leitfähigkeitssonden (120, 130, 140) das Vorhandensein der DNAPL-Phase (300) bestätigen;
h) Unterbrechen des Pumpens, wenn die Signale von den Leitfähigkeitssonden (120, 130, 140) das Erreichen eines vorbestimmten Mindestfüllstands der DNAPL-Phase (300) bestätigen, Aufrechterhalten der Druckbeaufschlagung des Hohlkörpers (111) und Schließen des zweiten Magnetventils (182), das den Strom bzw. Durchfluss zu der Rückgewinnungsrohrleitung (150) blockiert.

9. Verfahren nach Anspruch 8, wobei der Schritt g) des zyklischen Wiederholens der Schritte d) bis f) in vorbestimmten Intervallen ausgeführt wird, die durch einen in die Steuer- bzw. Regeleinheit (200) eingesetzten bzw. integrierten programmierbaren Timer festgelegt werden.

## Revendications

1. Appareil (100) pour l'élimination d'une phase liquide non aqueuse dense (DNAPL) (300) d'une masse d'eau dans un aquifère pollué comportant un dispositif de pompage (110) pour récupération et envoi vers la surface de la phase DNAPL (300), au moins une première sonde (120) pour la détection du niveau de la phase DNAPL (300), un conduit de récupération (150), relié à la sortie du dispositif de pompage (110), qui canalise la phase DNAPL (300) vers la surface, une unité de commande (200), positionnée sur la surface, qui commande l'alimentation électrique de l'appareil (100), l'acquisition et le traitement de signaux provenant de la première sonde (120), l'envoi de signaux pour démarrer ou arrêter le dispositif de pompage (110) sur la base des signaux provenant de la première sonde (120) ; **caractérisé en ce que** le dispositif de pompage (110) comporte un corps creux (111), un premier clapet anti-retour (180) agencé dans la partie inférieure du corps creux (111) qui met en communication fluidique le corps creux (111) avec le fluide aquifère, un tuyau d'aspiration (112) logé dans le corps creux (111), un deuxième clapet anti-retour (190) agencé à la sortie du tuyau d'aspiration (112) et reliant fluidiquement le tuyau d'aspiration (112) au conduit de récupération (150), une conduite pneumatique (170), partant de la surface, interceptée par une première électrovanne (181), reliée au corps creux (111) pour une mise sous pression sélective de celui-ci et une deuxième électrovanne (182) interceptant le conduit de récupération (150).

2. Appareil (100) selon la revendication 1 comportant une deuxième sonde (130) pour la détection de haut niveau de la phase DNAPL (300), positionnée au-dessus de la première sonde (120) et configurée pour la détection d'un haut niveau de la phase DNAPL (300), dans lequel l'unité de commande (200) commande l'acquisition et le traitement de signaux provenant de la première sonde (120) et de la deuxième sonde (130), et l'envoi de signaux pour le démarrage ou l'arrêt du dispositif de pompage (110) sur la base des signaux provenant de la première sonde (120) et de la deuxième sonde (130).

3. Appareil (100) selon la revendication 2 dans lequel la première sonde (120) et la deuxième sonde (130) sont des sondes de conductivité, l'appareil (100) comportant une troisième sonde de conductivité de référence (140) positionnée au-dessus des première et deuxième sondes de conductivité, l'unité de commande (200) commandant l'acquisition et le traitement de signaux provenant des sondes de conductivité (120, 130, 140), l'envoi de signaux pour le démarrage ou l'arrêt du dispositif de pompage (110) sur la base des signaux provenant des sondes de conductivité (120, 130, 140).

4. Appareil (100) selon la revendication 3 dans lequel les sondes de conductivité (120, 130, 140) comportent un corps central en matériau électriquement conducteur, le corps central étant revêtu d'un matériau isolant sauf pour une partie qui est exposée au contact des fluides aquifères.

5. Appareil (100) selon l'une quelconque des revendications précédentes dans lequel l'unité de commande (200) comporte au moins une batterie rechargeable pour l'alimentation électrique sans l'utilisation de sources d'alimentation externes supplémentaires.

6. Appareil (100) selon l'une quelconque des revendications précédentes dans lequel l'unité de commande (200) est connectée à au moins un panneau solaire (210) configuré pour recharger l'au moins une batterie rechargeable.

7. Appareil (100) selon l'une quelconque des revendications 1 à 3 dans lequel le dispositif de pompage (110) est une pompe électrique.

8. Procédé pour l'élimination d'une phase DNAPL (300) d'une masse d'eau dans un aquifère pollué comportant les étapes de :
a) fourniture d'un puits piézométrique (10) dans l'aquifère pollué ;
b) abaissement dans le puits piézométrique (10) de l'appareil (100) selon la revendication 1 ;
c) détection de la présence de phase DNAPL (300) au moyen de signaux provenant des sondes de conductivité (120, 130, 140) ;
d) dépressurisation du corps creux (111) par ouverture de la deuxième électrovanne (182) et fermeture de la première électrovanne (181) ;
e) fait de permettre, par ouverture du premier clapet anti-retour (180) soumis à une pression aquifère, l'entrée de la phase DNAPL (300) dans le corps creux (111) ;
f) mise sous pression du corps creux (111) par ouverture de la première électrovanne (181) entraînant la fermeture du premier clapet anti-retour (180) et la vidange du corps creux (111) via le tuyau d'aspiration (112) et le conduit de récupération (150) au moyen de la pression exercée à travers la conduite pneumatique (170) ;
g) répétition cyclique des étapes d) à f) si les signaux provenant des sondes de conductivité (120, 130, 140) confirment la présence de la phase DNAPL (300) ;
h) interruption du pompage lorsque les signaux provenant des sondes de conductivité (120, 130, 140) confirment l'atteinte d'un niveau minimal prédéterminé de la phase DNAPL (300), maintien sous pression du corps creux (111) et fermeture de la deuxième électrovanne (182) bloquant l'écoulement vers le conduit de récupération (150).

9. Procédé selon la revendication 8 dans lequel l'étape g) de répétition cyclique des étapes d) à f) est réalisée à des intervalles prédéterminés définis par un temporisateur programmable inséré dans l'unité de commande (200).
